# EUROPEAN PATENT APPLICATION

(11) **EP 2 088 734 A1**
(43) Date of publication of application: **12.08.2009**
(21) Application number: 08002304.7
(22) Date of filing: 07.02.2008
(51) Int. Cl.: H04L 29/06, H04L 12/22

(54) **Method and device for data processing and communication system comprising such device**

(71) Applicant: Nokia Siemens Networks Oy, 02610 Espoo (FI)
(72) Inventor: Pollakowski, Olaf, Dr., 81679 München (DE); Sanneck, Henning, Dr., 81669 München (DE); Schmelz, Lars Christoph, 85540 Haar (DE)
(74) Representative: Krombach, Rainer

(57) **Abstract**

A method and a device for data processing are provided, said method comprising the steps of (i) a network element is provided with first access data to access a first network; and (ii) utilizing the first access data, the network element is provided with second access data by a second network.

Furthermore, a communication system comprising such device is provided.

## Description

The invention relates to a method and to a device for data processing and to a communication system comprising such a device.

A rollout of a new telecommunications network or its expansions comprises tasks that require significant manual attendance, which cumulates to a large portion of the total operational expenditure (OPEX) for a network provider or operator.

One possibility to reduce OPEX is to automate configuration tasks, e.g., to allow an substantially automated installation (insertion) of new network nodes (e.g., 3G LTE eNodeB).

Today's mobile networks tend to develop towards all-IP environments, which in contrast to "closed networks" as 2G and 3G require additional effort to be protected against attack and misuse.

Such all-IP networks are open to various attacks, especially if IP auto-configuration schemes are used that allow attackers to easily obtain configuration data (e.g., IP configuration comprising IP-address, subnet mask or the like) and hence to communicate within the network with deceptive intent. In addition to the IP configuration, additional information is distributed throughout such an IP auto-configuration system, for example information about different gateways or servers offering dedicated services. In particular such additional information may be visible and can thus be utilized for fraudulent attacks in the network environment.

The problem to be solved is to overcome the disadvantages stated above and in particular to provide an efficient approach to allow a client or a device to get connected to at least one secure or trusted network.

This problem is solved according to the features of the independent claims. Further embodiments result from the depending claims.

In order to overcome this problem, a method for data processing is provided comprising the steps:
- a network element is provided with first access data to access a first network;
- utilizing the first access data, the network element is provided with second access data by a second network.

Advantageously, the approach provided allows the network element, e.g., a client, a host or a device (base station, femto base station, etc.), to get connected to the at least one trusted network by revealing only necessary information to such network element. In particular, communication capabilities of the network element may be restricted to a minimum in order to reduce a risk of an attack.

This first access data is preferably utilized to access the second network, e.g., via a security gateway. Hence, the network element can automatically get connected to a trusted (second) network via an untrusted (first) network. This efficiently utilizes an IP environment that may enable auto-configuration without any need of pre-configuration of the network element. Hence, advantageously, there is no or little time or effort to be spent configuring the network element to be able to get connected to an IP network environment.

In an embodiment, said first access data is provided by the first network, in particular by an auto-configuration server, in particular by a DHCP server, of the first network.

In another embodiment, said first access data is pre-configured at the network element.

It may hence also be an option that the first access data is pre-configured at the network element. In particular, a portion of the second access data may also be pre-configured and stored, e.g., with the network element.

In a further embodiment, the first access data comprises IP data, in particular at least one of the following:
- an IP address;
- a subnet mask;
- information as how to reach a gateway of the second network.

In a next embodiment, the first access data is valid for a limited time interval.

Hence, the first access data provided may be associated with a duration after which said first access data expires (lease duration in DHCP). The same may apply for the second access data.

It is also an embodiment that the time interval is extended if the network element obtains access to the second network.

Hence, after successful authentication, said time interval is extended. This may apply in an analog manner to the second access data.

Pursuant to another embodiment, the first network is an untrusted network, in particular an commonly accessible IP network. In particular, the second network may be a trusted network, e.g., an IP network comprising a security policy.

According to an embodiment, the first access data and/or the second access data comprise information to access at least one further network, which is in particular a trusted network.

Hence, the access data may provide information regarding any further (trusted) network(s). Advantageously, the second access data provide information relating to another trusted network, which thus can only be accessed by the network element after it has obtained access to the second network. This allows to build or establish a cascaded security, i.e. networks with different levels of security.

According to another embodiment, each network comprises at least one network element that can be accessed for processing various functions and/or services.

Hence, the second network may comprise at least one particular network element, e.g., client, server, host, etc., that provides a function or a service for the network element (outside the actual trusted network) to use or access. Depending on the level of security, the particular network element providing such function or service can be encapsulated within the respective trusted network.

In yet another embodiment, at least partially encryption is utilized for processing data via the networks and/or network elements.

According to a next embodiment, the network element is or is associated at least with one of the following:
- a base station;
- a femto base station;
- a network node of a communication network, in particular a 2G, 2.5G, 3G, 3G LTE, WiMax network;
- a computer and/or processing unit;
- any host or client.

Pursuant to yet an embodiment, each network comprises a wireless and/or a fixed line functionality.

It is also an embodiment that the second access data comprises IP data, in particular at least one of the following
- an IP address;
- a subnet mask;
- information as how to reach a gateway of at least one further network.

As a next embodiment the second access data is valid for a limited time interval.

In particular, the second access data may be provided by a DHCP server of the second network.

According to a further embodiment, the network element mutual authenticates with the first network and/or the second network.

According to yet an embodiment, the network element is authenticated by a security gateway prior to accessing the second network. In particular, the network element and the security gateway may be mutually authenticated. As an option, the security gateway provides a DHCP server functionality and in particular provides at least a portion of the second access data (to the network element).

As per another embodiment, a secured tunnel is set up between the network element and the security gateway. Preferably, traffic between the network element and the second network can be routed through said secured tunnel.

It is also an embodiment that a trust level is individually set for the second network and/or for each further network.

The problem stated above is also solved by a device comprising a processor unit that is equipped and/or arranged such that the method as described herein is executable on said processor unit.

According to an embodiment, the device is a communication device, in particular a network element, a client, a host, a server, a base station and/or a femto base station.

The problem stated supra is further solved by a communication system comprising the device as described herein.

Embodiments of the invention are shown and illustrated in the following figures:
- Fig.1: shows an exemplary deployment scenario comprising an untrusted network and several trusted networks that preferably provide different levels of security;
- Fig.2: shows a message chart between network components depicted in Fig.1.

The approach provided comprises a mechanism that allows a newly installed network element (also referred to as host, client, computer of any kind) that is located in an unsecured network (domain) to automatically establish and/or configure a secured connection to an internet host in a secured (trusted) network (domain).

The mechanism comprises deployment scenarios and special security procedures within these deployment scenarios.

Further, the approach provided comprises several deployment scenarios and security procedures. Depending on actual security requirements, a certain deployment scenario and security procedure may be selected to provide the degree of security required.

In particular, the following terms are used herein:

Trusted Network (Domain):
Such Trusted Network Domain relates to a network that is in particular managed by a single administrative authority. Within the Trusted Network Domain the same level of security and usage of security services may apply. Preferably, a particular level of security may be preserved at any time in such Trusted Network Domain (see also 3GPP TR 33.210: IP network layer security (Rel.7), v.7.3.0, September 2007).

Untrusted Network (Domain):
Said Untrusted Network Domain relates to at least one network that is under control of another authority. For such network there is no or little information about a level of security and there is no possibility to influence an enforcement of security policies.

Security Gateway (SEG):
An SEG may be deployed at the border between said trusted network and said untrusted network. The SEG comprises in particular the following properties and functions:
- The SEG acts as a barrier between the untrusted network and the trusted network.
- The SEG is able to authenticate network elements or nodes that want to set up connections from the untrusted network towards the trusted network.
- After successful authentication, the SEG acts as a gateway between the network elements of the untrusted network and those of the trusted network. This may be achieved by utilization of secured tunnels (e.g., IPSec associations) between the network element in the untrusted network and the security gateway.
- In order to perform a mutual authentication, the SEG may need means to verify identity credentials provided by the connecting network element or client (e.g., the SEG needs to verify certificates or features provided to transfer said verification to another server).
- As soon as a secured tunnel is set up, the client can be virtually shifted into the trusted network. That means, this client receives a valid IP configuration for the trusted network. All traffic to and from the trusted network may be routed through the tunnel.

The approach provided in particular comprises the following concepts:
a. Deployment of an IP auto-configuration service in the untrusted domain: In said untrusted domain, an IP auto-configuration service shall be available. Such service may provide an initial IP configuration to the new host or client to allows it to communicate with other internet hosts.
b. Partition of the trusted domain into separated trusted domains: The trusted domain may be partitioned into separated trusted domains. A level of trust can be set independently for each such separated trusted domain. As an option, levels of trust can depend from one another, e.g., a particular trusted domain can only be accessed by a network element or client if it already obtained access to a different trusted domain.
c. Deployment of Security Gateways (SEGs): At the border between the untrusted domain and the trusted domain, Security Gateways (SEGs) may be deployed. Communication between the untrusted domain and trusted domain may be available via said SEG only.
d. Deployment of an IP auto-configuration service in each trusted domain: Each trusted domain may provide its own IP auto-configuration service. This service provides the client with an IP configuration required to communicate within the trusted domain.

Regarding an initial IP connectivity setup, the following steps may preferably be considered:
(1) In a first phase, a DHCP Server that resides within an untrusted domain provides a host in the untrusted domain with a temporary IP configuration.
   This temporary IP configuration enables an initial communication between the host and a gateway server (e.g., a SEG) that represents the interface between the untrusted and the trusted domain. Preferably, the initial configuration package comprises information as how to reach the gateway.
   Advantageously, the IP configuration provided by the DHCP server of the untrusted domain is valid for a limited time interval. Such time interval may be long enough to allow the host in the untrusted domain to perform a mutual authentication with the security gateway or any kind of gateway server.
   In addition to the limited validity, the IP configuration information can be bound to a secure authentication algorithm to gain a higher level of security.
(2) After the initial IP configuration, the host in the untrusted domain connects to the gateway server, e.g. the security gateway, that is located or associated with the trusted network. Preferably, a mutual authentication between the host and the security gateway is conducted.
   Depending on a security policy of the trusted network, further communication towards the trusted network may be secured by an encrypted tunnel.
(3) After the communication is secured, the host in the untrusted domain obtains an IP configuration provided by a DHCP Server of the trusted network that is protected by the security gateway.
   The IP configuration provided may comprise information relating to hosts within the trusted network.
(4) In case there is a communication link to be set up with several trusted networks, the IP configuration provided in step (3) may comprise information on how to reach any further security gateway.

After the host within the untrusted domain has completed its communication with at least one host of the at least one trusted network, the secured connection may be terminated.

Next, a subsequent security gateway may be contacted to, e.g., restart said IP connectivity with step (1).

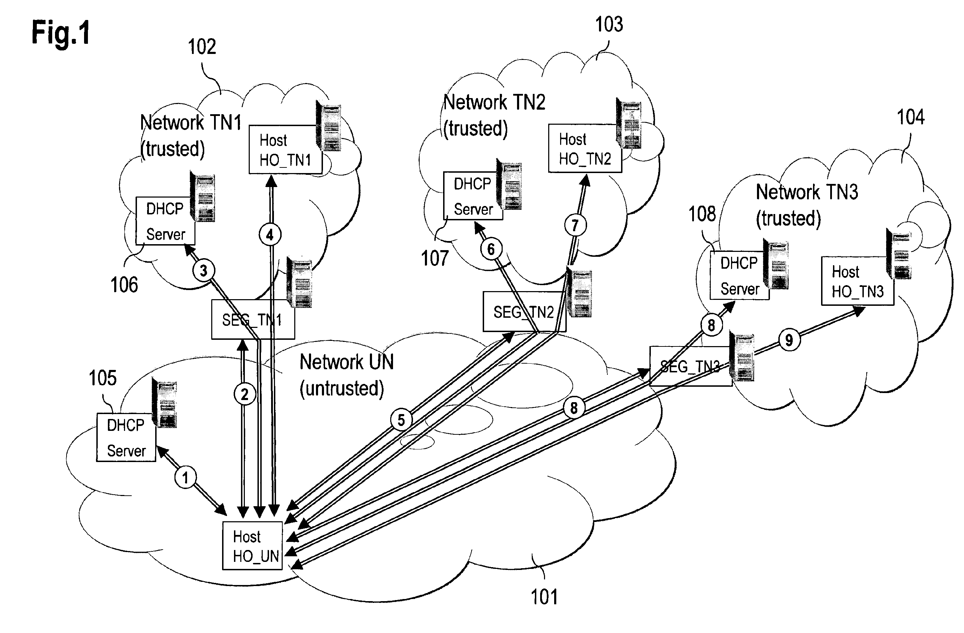

**Fig.1** shows an exemplary deployment scenario comprising
- an untrusted network 101 with a host HO_UN and a DHCP server 105;
- a trusted network 102 with a host HO_TN1, a DHCP server 106 and a security gateway SEG_TN1;
- a trusted network 103 with a host HO_TN2, a DHCP server 107 and a security gateway SEG_TN2;
- a trusted network 104 with a host HO_TN3, a DHCP server 108 and a security gateway SEG_TN3.

According to the example, the host HO_UN may be an Internet host installed and physically connected to the untrusted IP network 101.

Optionally, the host HO_UN may not have any pre-configured IP configuration to be used and it may hence at first not be able to communicate with any of the networks 101 to 104.

The following procedure may apply:

### Initial IP connectivity Establishment

(A1) The host HO_UN obtains a temporary IP configuration IPC1_UN comprising, e.g., a HO_UN IP address, for the untrusted network 101 from the DHCP server 105 in the untrusted network 101.
(A2) The configuration IPC1_UN comprises an IP address of the Security Gateway SEG_TN1 for accessing said Security Gateway SEG_TN1.
   A validity period for the configuration IPC1_UN is preferably set to a duration that is required for setting up a connection with a trusted network.

### Connection establishment with trusted network 102

(B1) The host HO_UN establishes a secured connection to the security gateway SEG_TN1. This may comprise a mutual authentication between the host HO_UN and the security gateway SEG_TN1.
(B2) The validity period of the IP configuration IPC1_UN may be extended if the mutual authentication and the establishment of a secured tunnel are successful.
(B3) The host HO_UN is provided with another (preferably temporary) IP configuration IPC_TN1 (including another IP address for the host HO_UN) from the IP auto-configuration service of the trusted network 102.
   This configuration IPC_TN1 may comprise information about services and/or service access points offered by said trusted network 102.
(B4) OPTIONAL: The security gateway SEG_TN1 monitors the IP auto-configuration traffic passing and stores an expiry date of IP configuration IPC_TN1.
(B5) Now, the host HO_UN is able to access the trusted network 102 and to use any kind of service offered by this trusted network 102.
(B6) The host HO_UN may be provided with another temporary IP configuration IPC2_UN (comprising a further IP address for the host HO_UN) for later communication with the trusted network 103.
   This configuration IPC2_UN comprises the IP address of the security gateway SEG_TN2. There are in particular two possibilities as how the host HO_UN may obtain such information:
   - The information or a part thereof is provided by the IP auto-configuration service.
   - The information is provided by another application level function.
(B7) The IP configurations IPC1_UN and IPC_TN1 each becomes invalid either because the time period (lease) expires or because they are invalidated by an appropriate action.

### Connection Establishment with trusted network 103

(C1) The host HO_UN establishes a secured connection to the security gateway SEG_TN2. This may comprise a mutual authentication between the host HO_UN and the security gateway SEG_TN2.
(C2) The validity of the IP configuration IPC2_UN is extended if the mutual authentication and the establishment of secured tunnel are successful.
(C3) The host HO UN is provided with another (preferably temporary) IP configuration IPC_TN2 (including another IP address for the host HO_UN) from the IP auto-configuration service of the trusted network 103.
   This configuration IPC_TN2 may comprise information about services and/or service access points offered by said trusted network 103. Alternatively, this information may be yet provided in step (B6). In this case, no IP auto-configuration service is required in the trusted network 103.
(C4) OPTIONAL: The security gateway SEG_TN2 monitors the IP auto-configuration traffic passing and stores an expiry date of IP configuration IPC_TN2.
(C5) Now, the host HO_UN is able to access the trusted network 103 and to use any kind of service offered by this trusted network 103.
(C6) The host HO_UN may be provided with another temporary IP configuration IPC3_UN (comprising a further IP address for the host HO_UN) for later communication with the trusted network 104.
   This configuration IPC3_UN comprises the IP address of the security gateway SEG_TN3. There are in particular two possibilities as how the host HO_UN may obtain this information.
   - The information or a part thereof is provided by the IP auto-configuration service.
   - The information is provided by another application level function.
(C7) The IP configurations IPC2_UN and IPC_TN2 each becomes invalid either because the time period (lease) expires or because they are invalidated via an appropriate action.

### Connection Establishment with the Trusted Network TNn

According to the steps Ci (i=1..5,7; i.e. except for step (C6)) the host HO_UN does not have any valid IP configuration after the IP configurations IPCn_UN and IPC_TNn have become invalid. Hence, the host HO_UN is no longer able to communicate with any of the networks indicated.

### (Pre-)Conditions

In order to solve the problems that are described above, a two phase scheme may preferably be used. A DHCP server can be used for IP auto-configuration services. This may apply to Internet Protocol of different versions, e.g., IPv4 or IPv6. Preferably, the following conditions are met:
a. The DHCP server that resides within the untrusted network domain may only provide the initial IP configuration. It may not extend existing leases.
b. Preferably, all leases are of limited validity, which is an integral DHCP feature. If the DHCP client acts as described in the standards, the configuration will expire if not extended and hence further communication of or with the host HO_UN is prevented.
   If DHCPv6 is applied, a message can be used that forces the DHCP client to release the IP configuration previously provided.
c. DHCP requests of the host HO_UN may have to reach all security gateways either because they reside within the broadcast domain of the untrusted networks or via DHCP relays.
d. A security gateway may in particular once act as a DHCP server for the host HO_UN. E.g., after a successful mutual authentication, the IP configuration extension request of the host HO_UN will be replied by the SEG with a configuration extension reply.

It may also be an alternative that the security gateway is able to deny any further communication with the host HO_UN after an authentication failed or after a timeout. In particular said timeout may efficiently limit a duration that could be utilized for an attack even in case a fraudulent user may have gained access to a secure (portion of the) network.

### Level of Security

The deployment scenario and security procedures may be utilized to provide a scalable level of security throughout the (trusted) networks. Depending on the particular scenario or use case, a maximum security setup may be required or reduced security requirements may be applicable. In the latter case, it is possible to reduce the necessary effort spent for security by relaxing the achievable level of security, e.g., as follows:
a. Merging different separated trusted networks into a single trusted network.
b. Setting a validity of the IP configuration IPCn_UN at the beginning to a value that grants the host HO_UN access to services within the trusted network TNn (instead of extending it after a successful authentication between the host HO_UN and the security gateway SEG_TNn and after establishment of a secured tunnel as described above in the example of a strict security setup).
c. IP configurations IPC1_UN, IPC2_UN and IPCn_UN can be identical (or at least portions thereof can be identical).

Depending on the security level to be applied, the initial IP configuration package may comprise various information. For example, said IP configuration package may comprise addresses and/or names of security gateways (SEG) or of other servers that provide functionalities required.

The higher the security level, the less information may be provided by the initial IP configuration package.

This also corresponds on the level of security that is assumed for the access networks. The higher the basic trust level towards the "untrusted" network, the less security is required, for example:
- Totally secured and trusted access network: Initial configuration holds information about the location of all auto-configuration systems needed and all gateways to said auto-configuration and to an OAM-Network.
- Potentially insecure (risky) access network: The initial configuration provides the required first IP configuration and information regarding the first gateway.

### Example

This example shows a scenario utilizing a high degree of security and using DHCP as an IP auto-configuration service.

DHCP could be used as such IP auto-configuration service. Additional information needed may be included into optional data fields, as foreseen by the DHCP standard.

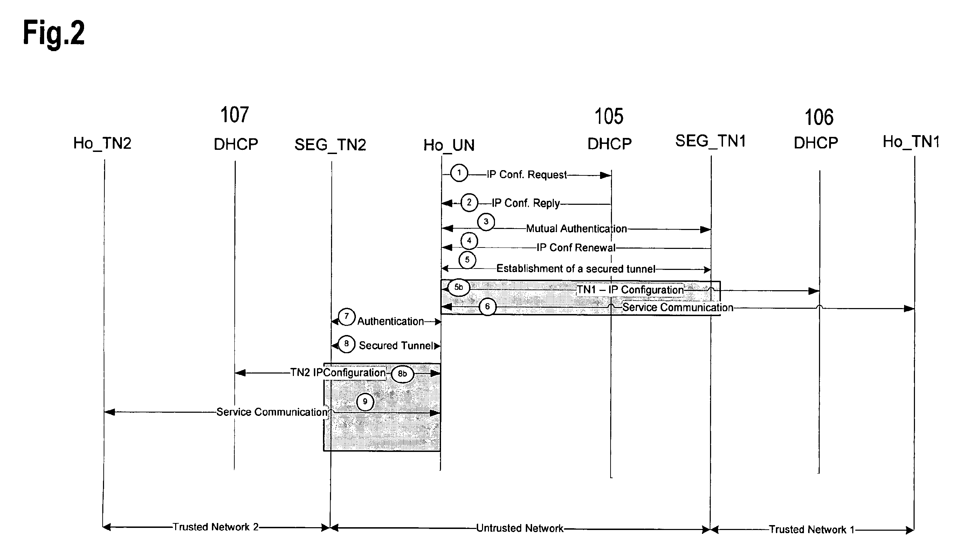

**Fig.2** shows an message sequence chart according to the example described hereinafter.
1. The host HO_UN broadcasts a DHCP request for an IP configuration in the untrusted network domain. Only DHCP servers (such as DHCP server 105) of the untrusted network domain may process such request.
2. The DHCP server 105 of the untrusted domain responds with a temporary configuration (NE IP address, SEG_TN1 IP address, basic IP configuration parameters).
   a. This configuration has a limited validity. The validity duration shall be long enough that the host HO_UN can successfully authenticate itself towards a security gateway.
   b. The DHCP server 105 may lock this IP configuration for a long time and hence prevent re-using it for said time. Advantageously, this IP configuration is not reused before the available pool of addresses is exhausted. In case of a Class A network, there are 16.777.214 IP addresses available. Assuming 100 requests per second, the pool would last for about 46 hours. Hence, said long time could - according to this example - set to 45 hours.
   c. If the DHCP server detects that a client tries to request several configurations within a very short time, this client is deemed a fraudulent user and hence it is not provided with any IP configuration for a predetermined period of time.
3. The host HO_UN and the security gateway SEG_TN1 perform a mutual authentication using a secure authentication protocol.
   a. If the host HO_UN cannot successfully authenticate itself, the security gateway SEG_TN1 will abstain from further communication with this IP address for a predetermined (long) time.
   b. If the security gateway SEG_TN1 cannot authenticate itself successfully, the host HO_UN will deduce that there has been an attack either on the DHCP Server or on the security gateway SEG_TN1.
4. After successful authentication of the host HO_UN, the validity of the initial IP configuration can be extended to a duration that is long enough that the host HO_UN can successfully perform its communication with hosts of the trusted network TN1 (e.g., host HO_TN1 of trusted network 102 according to Fig.1).
   In order to extend the validity of the IP configuration, the DHCP client automatically tries to get the renewal after a predetermined period of time, e.g., after lease-duration/2 seconds. In case of a previous successful authentication, the security gateway will responds with a lease extension message.
5. The host HO_UN and the security gateway SEG_TN1 agree on setting up a secured communication tunnel.
   5b. Between the time when the communication between the security gateway SEG_TN1 and the host HO_UN is cryptographically secured and the time when the host HO_UN has a valid IP configuration for the trusted network TN1 (102 in Fig.1), the security gateway SEG_TN1 relays messages from the host HO_UN to the trusted network TN1 and vice versa.
      The host HO_UN requests an IP configuration that shall enable communication over the encrypted tunnel. The DHCP server 106 within the trusted network TN1 provides the IP configuration package, which comprises information as how to reach the services within the trusted network TN1 (see also Fig.1), e.g., Software Download Servers, Database Download Servers or any other Servers needed.
6. Further processing steps are performed (software download, configuration data download). One of these steps is a final IP configuration. For the final IP configuration the host HO_UN is provided with two valid IP configuration packages.
   a. A new IP configuration comprises a further network element IP address with additional information (IP address and/or URI) about the security gateway that protects the operational network, i.e. the "productive" network of the network operator.
      In another embodiment, the initial IP configuration (see Fig.1, steps 1 and 2) is renewed and additional information about the location of this security gateway is provided to the host HO_UN.
   b. Another configuration is provided for communicating with the operational network containing all information necessary on how to reach the required systems and servers (e.g., addresses of OAM servers) using a communication link over the secured tunnel.
   c. Furthermore, there may be an additional IP auto-configuration service in one of the trusted networks that distributes said final IP configuration.
7. The network element, i.e. the host HO_UN and an OAM security gateway perform mutual authentication.
   a. If the authentication of the host HO_UN fails, the OAM security gateway prevents further communication with this IP address used by the host HO_UN.
   b. If the authentication of the OAM security gateway fails, the host HO_UN assumes that the OAM security gateway is compromised or has been (successfully) attacked and acts according to a security policy which was given to it during the auto-configuration.
8. The host HO_UN and the OAM security gateway set up a secured tunnel.
   a. The host HO_UN utilizes the second IP configuration provided during the auto-configuration for the secured communication.
9. The host HO_UN connects to OAM systems and becomes fully manageable.
   The secured communication tunnel is also used for the management link during the operational phase.

### Further Advantages

The approach suggested herewith enables a highly flexible and configurable degree of security according to particular scenarios, environments and/or user demands.

An initial IP address may be assignment independent from further secure IP configuration mechanisms.

Interference of traffic is minimized as the traffic for a certain task is handled in a separate network (untrusted network) and is widely independent from any traffic to or within other trusted networks.

An optional separation of trusted networks increases the level of security as well as a reliability for the services provided by the single (trusted) networks as, e.g., a particular trusted network may not be reached without having successfully completed previous tasks (e.g., of authentication). Preferably, an information as how to access a security gateway of a subsequent (not yet accessible) trusted network may be hidden within a (previous) trusted network. Hence, a host first needs to obtain access to the trusted network in which the access information to the next security gateway is stored in order to (finally) access said subsequent trusted network.

There may be no explicit authentication required for the IP configuration provided to the host. This may be done implicitly by mutual authentication between the host and the security gateway. If the security gateway cannot successfully authenticate itself, the host may assume that the provided IP configuration is corrupted.

This temporary assignment of IP addresses decouples the IP auto-configuration from the IP transport planning tool chain. The initial configuration can be taken from a dynamic pool of addresses which brings additional security, as an eavesdropping attacker cannot gain information about the overall network configuration by simply collecting IP auto-configuration packages.

### Abbreviations:

- AN-GW: Auto-configuration Network Gateway / Auto-configuration Network Security Gateway
- ASS: Auto-configuration Support System
- DHCP: Dynamic Host Configuration Protocol
- GW: Gateway
- HO_UN: Internet Host in the Untrusted Network
- IPC_TNn: IP Configuration valid for the Trusted Network n
- IPCn_UN: IP Configuration n valid for the Untrusted Network
- NE: Network Element
- OAM: Operation, Administration and Maintenance
- OPEX: Operational Expenditures
- SEG: Security Gateway
- SEG_TNn: Security Gateway at the border between the UN and the TNn
- TNn: Trusted Network
- UN: Untrusted Network:

## Claims

1. A method for data processing comprising the steps:
- a network element is provided with first access data to access a first network;
- utilizing the first access data, the network element is provided with second access data by a second network.

2. The method according to claim 1, wherein said first access data is provided by the first network, in particular by an auto-configuration server, in particular by a DHCP server, of the first network.

3. The method according to any of the preceding claims, wherein said first access data is pre-configured at the network element.

4. The method according to any of the preceding claims, wherein the first access data comprises IP connectivity data, in particular at least one of the following:
- an IP address;
- a subnet mask;
- information as how to reach a gateway of the second network.

5. The method according to any of the preceding claims, wherein the first access data is valid for a limited time interval.

6. The method according to claim 5, wherein the time interval is extended if the network element obtains access to the second network.

7. The method according to any of the preceding claims, wherein the first network is an untrusted network.

8. The method according to any of the preceding claims, wherein the second network is a trusted network.

9. The method according to any of the preceding claims, wherein the first access data and/or the second access data comprise information to access at least one further network, which is in particular a trusted network.

10. The method according to any of the preceding claims, wherein each network comprises at least one network element that can be accessed for processing various functions and/or services.

11. The method according to any of the preceding claims, wherein at least partially encryption is utilized for processing data via the networks and/or network elements.

12. The method according to any of the preceding claims, wherein the network element is or is associated at least with one of the following:
- a base station;
- a femto base station;
- a network node of a communication network, in particular a 2G, 2.5G, 3G, 3G LTE, WiMax network;
- a computer and/or processing unit;
- any host or client.

13. The method according to any of the preceding claims, wherein each network comprises a wireless and/or a fixed line functionality.

14. The method according to any of the preceding claims, wherein the second access data comprises IP data, in particular at least one of the following
- an IP address;
- a subnet mask;
- information as how to reach a gateway of at least one further network.

15. The method according to any of the preceding claims, wherein the second access data is valid for a limited time interval.

16. The method according to any of the preceding claims, wherein the second access data is provided by a DHCP server of the second network.

17. The method according to any of the preceding claims, wherein the network element mutual authenticates with the first network and/or the second network.

18. The method according to any of the preceding claims, wherein the network element is authenticated by a security gateway prior to accessing the second network.

19. The method according to claim 18, wherein the network element and the security gateway are mutually authenticated.

20. The method according to any of claims 18 or 19, wherein the security gateway provides a DHCP server functionality and in particular provides at least a portion of the second access data.

21. The method according to any of claims 18 to 20, wherein a secured tunnel is set up between the network element and the security gateway.

22. The method according to claim 21, wherein traffic between the network element and the second network is routed through the secured tunnel.

23. The method according to any of the preceding claims, wherein a trust level is individually set for the second network and/or for each further network.

24. A device comprising a processor unit that is arranged such that the method according of any of the preceding claims is executable on said processor unit.

25. The device according to claim 24, wherein said device is a communication device, in particular a network element, a client, a host, a server, a base station and/or a femto base station..

26. Communication system comprising the device according to any of claims 24 or 25.
